# EUROPEAN PATENT SPECIFICATION

(11) **EP 1 612 084 B1**
(45) Date of publication and mention of the grant of the patent: **25.02.2009**
(21) Application number: 05014180.3
(22) Date of filing: 30.06.2005
(51) Int. Cl.: B60L 11/00, B60L 11/18, B62M 23/02

(54) **Electrically assisted bicycle**
Elektrisch unterstütztes Fahrrad
Bicyclette à assistance électrique

(30) Priority: 02.07.2004 JP 2004196272
(43) Date of publication of application: 04.01.2006
(73) Proprietor: SANYO ELECTRIC CO., LTD., Moriguchi-shi, Osaka-fu 570-8677 (JP)
(72) Inventor: Suhara, Toshihiro Sanyo Electric Co., Ltd., Moriguchi-shi Osaka 570-8677 (JP); Shimazu, Masahiro Sanyo Electric Co., Ltd., Moriguchi-shi Osaka 570-8677 (JP)
(74) Representative: TER MEER - STEINMEISTER & PARTNER GbR

(56) References cited:
- EP-A- 0 798 204
- EP-A- 0 994 015
- US-A- 3 921 745
- US-A- 6 157 149

## Description

### FIELD OF THE INVENTION

The present invention relates to a method for controlling a regenerative state of a motor of an electrically assisted bicycle which is driven with human power and with auxiliary power afforded by an assisting power device.

### BACKGROUND OF THE INVENTION

Electrically assisted bicycles are known in recent years wherein auxiliary power given by an electric motor or like power device is used for assisting in running in addition to the force produced by the rider by pedaling so as to reduce the pedaling force to be produced by the rider.

With such electrically assisted bicycles, regenerative braking is performed on descents to charge a battery with the power generated by regenerative braking. This realizes savings in energy, resulting in a great increase in the distance of cycling by effectively utilizing the auxiliary power with the capacity of the battery remaining unchanged although such an increase is unavailable if the regenerative braking is not practiced (see, for example, the publications of JP-A No. 9-254861 and JP-A No. 10-147150).

The electrically assisted bicycles disclosed in these publications are adapted to perform regenerative braking when the brake lever is manipulated. Accordingly, the charging by regenerative braking can be effected only when the brake is actuated on descents, failing to fully increase the cycling distance.

EP 0 994 015 A2 is concerned with a bicycle with power assisting function that have a human power drive mechanism for producing a drive force with human power, a battery adapted for discharging and recharging, an electric power drive mechanism including an electric motor for producing a drive force with electric power output from the battery, speed detecting means for detecting the running speed of the bicycle and a control unit for controlling the electric motor of the power drive mechanism. The electric motor can be operated as an electric generator for utilizing part of regenerated electric energy to recharge the battery.

When the running speed of the bicycle is higher than a predetermined level while the bicycle is running on the flat terrain, a regenerating mode is set to regenerate electric energy.

EP 0 798 204 A1 discloses a regeneration control device for a bicycle with an auxiliary motor wherein the auxiliary motor can be used as a generator for generating electric power to recharge the battery. The re-generation control device judges the necessity of regeneration based on the bicycle speed detected by a bicycle speed detection means and pressing force detected by pressing force detection means and changes the motor to a state of regeneration according to the detected speed and pressing force. In particular, the regenerating state is set when the bicycle speed is higher than a certain value and the pressing force is lower than a certain level.

An object of the present invention, which has been accomplished to solve the above problem, is to provide a method for controlling a regenerative state of a motor of an electrically assisted bicycle to remarkably increase the cycling distance by effectively utilizing auxiliary power.

### SUMMARY OF THE INVENTION

According to the present invention the above object is achieved by the method of claim 1.

By controlling a regenerative state of a motor of an electrically assisted bicycle as described in claim 1, the battery can be charged by effectively utilizing the running energy of the bicycle, whereby the cycling distance can be increased remarkably. The battery is charged only while the bicycle is running at a speed not lower than the predetermined value, and the bicycle is assisted with the drive force of the electric power drive mechanism when running at a speed below the predetermined value. Accordingly, no trouble occurs in the stability of running at a low speed range. In addition, when the state of reduced running speed continues for the specified period of time, the regenerative state is changed over to the nonregenerative state, the running efficiency will not be impaired. Since a changeover takes place when a lower running speed remains for the specified period of time, a changeover from the regenerative state to the nonregenerative state and vice verse will not occur frequently, whereby a stabilized state of running can be ensured.

Preferably, a changeover between an "economical charging" mode wherein the motor is set in the regenerative state when the running speed detected by the speed detecting means is not lower than the predetermined value and a "standard mode" wherein the motor is set in the nonregenerative state irrespective of the running speed detected by the speed detecting means is effected by changeover means.

Thereby, the battery can be charged by effectively utilizing the running energy of the bicycle when the "economical charging" mode is selected, whereby the cycling distance can be increased remarkably. The battery is charged in the "economical charging" mode only while the bicycle is running at a speed not lower than the predetermined value, and the bicycle is assisted with the drive force of the electric power drive mechanism when running at a speed below the predetermined value. Accordingly, no trouble occurs in the stability of running at a low speed range. The rider can select the "economical charging" mode or the "standard" mode as required, with the result that the bicycle is usable with improved convenience.

Preferably, charging of the battery with the power generated by the motor is interrupted by the control unit when the remaining capacity of the battery is not lower than a specified value.

Accordingly, when the remaining capacity of the battery is not lower than the specified value, the control unit interrupts the charging of the battery with the power generated by the motor. This obviates the likelihood of the battery becoming overcharged.

Preferably, charging of the battery with the power generated by the motor is interrupted by the control unit when the running speed detected by the speed detecting means is not lower than a given value.

Accordingly, when the running speed is not lower than the given value, the control unit interrupts the charging of the battery with the power generated by the motor. This obviates the likelihood of the battery becoming overcharged.

Preferably, regenerative braking upon detecting braking to charge the battery is effected by the control unit. Since the control unit performs regenerative braking upon detecting the application of the brake, improved safety will result, while the battery can be charged by the regenerative braking, whereby the cycling distance can further be increased.

Preferably, the pedaling force of the bicycle is detected by means of a pedal torque sensor, and the regenerative state is changed over by the control unit to the nonregenerative state when the running speed detected by the speed detecting means is below the predetermined value and when the pedaling force detected by the pedal torque sensor is not lower than a specified value. Thus, the regenerative state is changed over to the nonregenerative state when the running speed drops and when the pedaling force is not lower than the specified value. When a great pedaling force is required as on an ascent, therefore, the regenerative state can be promptly changed to the nonregenerative state without the likelihood of impairing the running performance.

It is desired that the electric power to be generated by the motor is set at a greater value as the running speed detected by the speed detecting means increases. Thus, since the electric power to be generated is set to a greater value with an increase in the running speed, the battery can be charged to a greater level utilizing the excessive force of the rider, consequently serving to further increase the cycling distance.

Preferably, the auxiliary power of the electric power drive mechanism in the nonregenerative state is set by the control unit (13) at a lower value when selecting the "economical charging" mode than when selecting the "standard" mode. Thus, the auxiliary power of the electric power drive mechanism in the nonregenerative state is set at a lower value when in the "economical charging" mode than when in the "standard" mode, so that the consumption of the power of the battery can be diminished to result in a further increase in the cycling distance.

### BRIEF DESCRIPTION OF THE DRAWINGS

FIG. 1 is a block diagram showing control means embodying the invention;
FIG. 2 is a circuit diagram for illustrating a charge-discharge circuit;
FIG. 3 is a flow chart for illustrating an "economical charging" mode; and

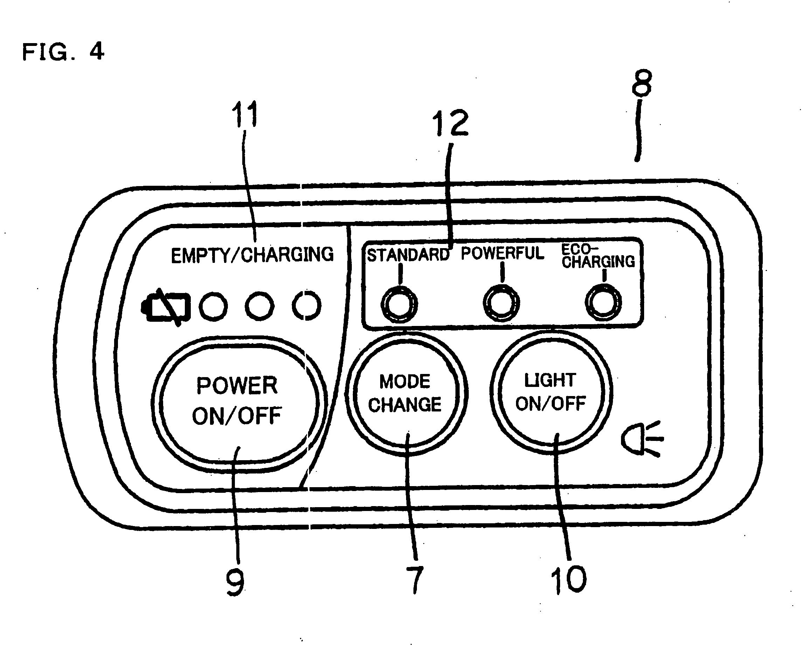

FIG. 4 is a plan view showing a manipulation unit mountable in the vicinity of the handle of an electrically assisted bicycle.

### DESCRIPTION OF THE PREFERRED EMBODIMENT

Electrically assisted bicycles comprise a human power drive mechanism for transmitting the pedaling force of the rider from pedals to a wheel via a crank, chain, etc., an electric power drive mechanism including an electric motor serving as a drive source for assisting the pedaling force of the human power mechanism and a battery which is adapted for discharging and recharging for supplying electric power to the electric power drive mechanism.

An embodiment of the present invention will be described below in detail with reference to the drawings.

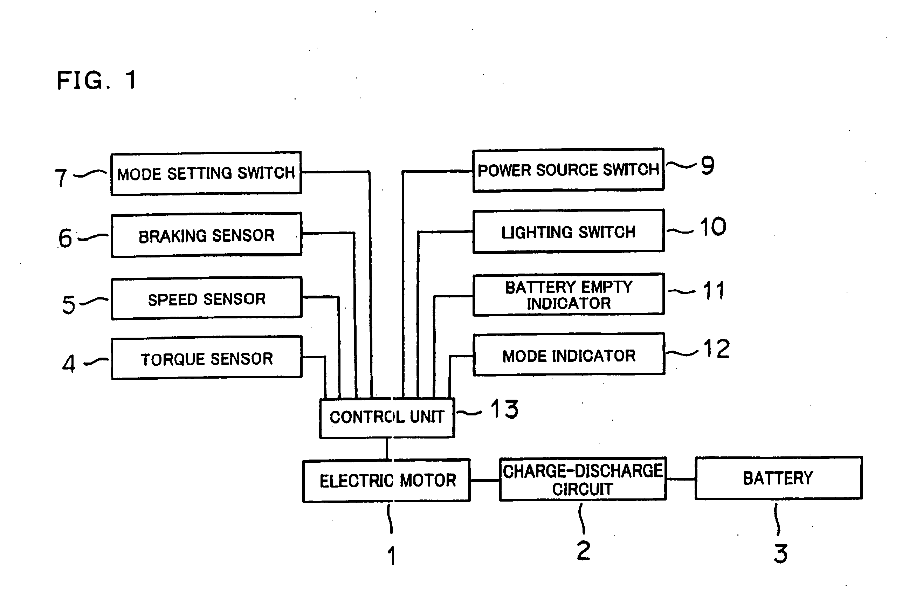

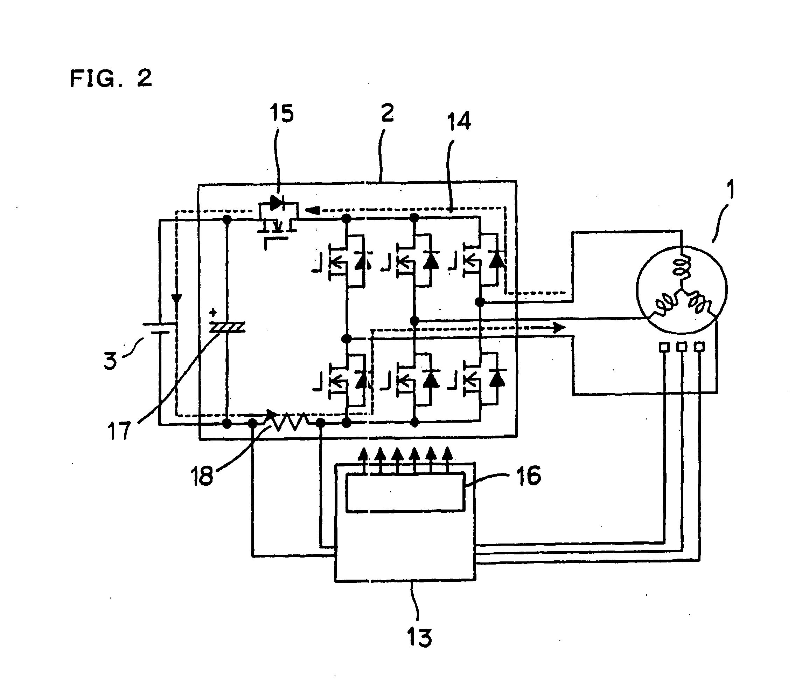

FIG. 1 is a block diagram showing control means of an electrically assisting bicycle, and FIG. 2 is a diagram showing a charge-discharge circuit of the bicycle.

With reference to FIG. 1, an electric motor 1 is coupled to an unillustrated bicycle wheel for transmitting power thereto. The motor rotates the wheel with the electric power supplied from a battery 3 through the charge-discharge circuit 2. Through the charge-discharge circuit 2, the battery 3 is charged with the power generated utilizing the rotation of the wheel. The state in which the wheel is rotated with the electric power supplied from the battery 3 will hereinafter be referred to as the "nonregenerative state," and the state in which the battery 3 is charged with the power generated utilizing the rotation of the wheel as the "regenerative state."

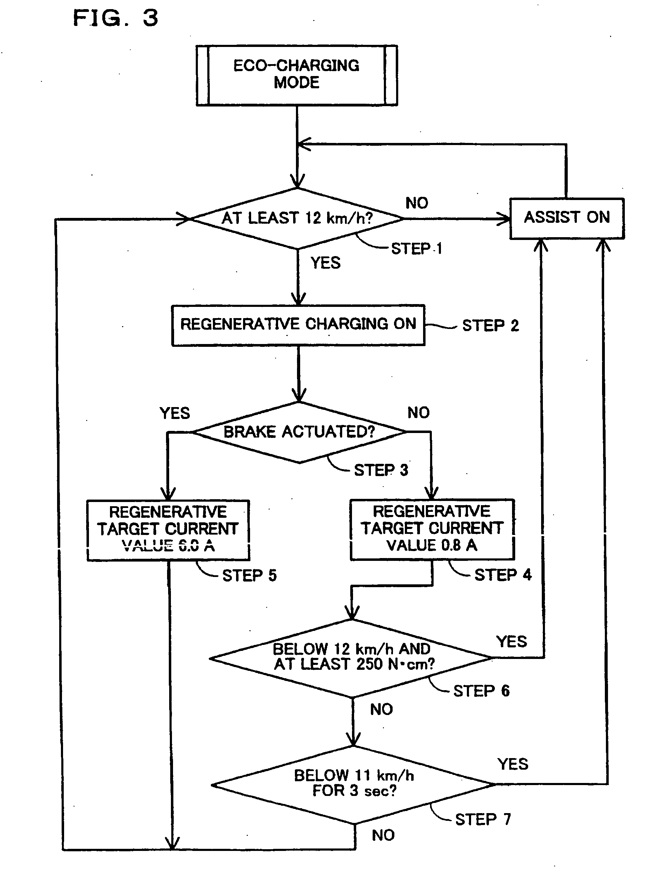

Indicated at 4 is a torque sensor for detecting the pedaling force exerted on the pedals. A speed detecting means 5 detects the running speed of the bicycle from the rotational speed of the motor 1. A braking sensor 6 detects the actuation of the brake of the bicycle. A mode setting switch 7 is provided on a manipulation unit 8 mountable in the vicinity of the handle and to be described later, and is used by the rider. FIG. 3 shows the manipulation unit 8 provided with the mode setting switch 7. The bicycle is set for one of operating modes, i.e., "standard," "powerful" and "economical charging" (hereinafter referred to briefly as "eco-charging").

The manipulation unit 8 is provided, in addition to the mode setting switch 7, with a power source switch 9, lighting switch 10 for on-off controlling a light serving as the unillustrated headlight of the bicycle, battery empty indicator 11, and mode indicator 12 for indicating the mode selected by the mode setting switch 7.

Indicated at 13 is a control unit for receiving signals from the torque sensor 4, speed detecting means 5, braking sensor 6, mode setting switch 7, power source switch 9 and lighting switch 10 and controlling the charge-discharge circuit 2, battery empty indicator 11, mode indicator 12 and the unillustrated light.

The charge-discharge circuit 2 will be described below with reference to FIG. 2. A MOSFET circuit 14 is provided between the motor 1 and the battery 3 for controlling the motor 1. An FET 15 is connected between the MOSFET circuit 14 and the positive electrode of the battery 3. The MOSFET circuit 14 and the FET 15 are controlled by a drive circuit 16 of the control unit 13. Indicated at 17 is a capacitor, and at 18 a resistor.

When the running speed detected by the speed detecting means 5 is not lower than a specified value, i.e., at least 24 km/h according to the present invention, the drive circuit 16 turns off the FET 15, preventing the electromotive force of the motor 1 from increasing and charging the battery 3. If the electromotive force of the motor 1 increases during running at a high speed, and the output voltage of the battery 3 becomes 24 V or higher according to the embodiment, the battery 3 is likely to be charged and become overcharged. Accordingly, when the running speed is at least a given value, the FET 15 is turned off to prevent overcharging. The given speed is a value sufficiently higher than a predetermined speed of step 6 to be described later and at least a speed at which the battery 3 is undesirably charged with the electromotive force of the motor 1. The control unit 13 further detects the remaining capacity of the battery 3, and when the remaining capacity is not smaller than a predetermined value, i.e., at least 90% according to the embodiment, the control unit 13 turns off the FET 15 to prevent the battery 3 from being overcharged with the power to be generated by the motor 1 as when the brake is actuated. Overcharging is prevented in this way even in the case where any of the "standard" mode, "powerful" mode and "eco-charging" mode is selected.

According to the present embodiment, the FET 15 is connected between the battery 3 and the MOSFET circuit 14 for controlling the connection between the battery 3 and the MOSFET 14, whereas other component capable of controlling the connection, such as a relay, may alternatively be used.

The operation of the embodiment will be described next.

When the pedals are stepped on by the rider, the torque sensor 4 detects the pedaling force, whereupon the motor 1 is driven in accordance with the pedaling force to add an auxiliary force of the motor 1 to the human pedaling force and run the bicycle.

When the "eco-charging" mode is set by the mode setting switch 7, an inquiry is made as to whether the bicycle speed is not lower than a predetermined value, i.e., at least 12 kg/h in the present embodiment, with reference to the speed detecting means 5 as shown in the flow chart of FIG. 3 (step 1). If the running speed is less than the predetermined value, the bicycle is brought into a nonregenerative state to add to the pedaling force auxiliary power of the motor 1 in accordance with the pedaling force for running the bicycle. This auxiliary power is set 50% of the power in the "standard" mode to diminish the consumption of the battery 3. When the speed is found to be at least the predetermined value in step 1, the mode is changed over to the regenerative state, in which power is generated by the motor 1 to charge the battery 3 (step 2). At this time, an inquiry is made as to whether the brake is applied (step 3). When the inquiry is answered in the negative, the bicycle is in the usual state of running. If great current is produced, running load increases, so that a current value of 0.8 A is generated for charging the battery 3 (step 4). If the brake is on, regenerative braking can be utilized to obtain great current. Current of up to 6 A is therefore generated for charging the battery 3 (step 5). The greater the speed, the greater the current value to be generation by this regenerative braking is and the greater the braking force feels, so that improved safety can be achieved on descents.

For example, when the bicycle starts to ascend a slope during running in the regenerative state, and the speed drops to below the predetermined value, i.e., less than 12 km/h, with a pedaling force not lower than a specified value, i.e., 250 N·cm in the present embodiment, applied, the regenerative state is promptly changed over to the nonregenerative state since the rider will be greatly burdened in the regenerative state (step 6).

Even if the bicycle is not in condition for a changeover to the nonreqenerative state in step 6, the regenerative state is changed over to the nonregenerative state in the case where the bicycle remains at a speed less than the predetermined value, i.e., less than 11 km/h according to the present embodiment, for a specified period of time, i.e., for 3 seconds (sep 7). This specified period of time is provided to avoid frequent changeovers between the regenerative state and the nonregenerative state.

In the "standard" mode, the auxiliary power of the motor 1 is greater than in the "eco-charging" mode, the motor is not brought into the regenerative state but is held in the nonregenerative state even if the speed is not lower than the predetermined value. The motor is brought into the regenerative state only when the brake is actuated.

In the "powerful" mode, the auxiliary power of the motor 1 is greater than in the "standard" mode to lessen the burden on the rider.

Although the battery 3 is charged at a specified current value when the speed is not lower than the predetermined value (12 km/h) according to the embodiment, the charging current value may be increased as the running speed increases.

The speed detecting means 5 according to the embodiment is adapted to detect the running speed by detecting the rotation of the motor 1, the rotation of the wheel of the bicycle may be detected for the calculation of the running speed, or other detecting structure may be used.

## Claims

1. A method for controlling a regenerative state of a motor of an electrically assisted bicycle, the bicycle having
-- a human power drive mechanism for producing a drive force with human power,
-- a battery (3) adapted for discharging and recharging,
-- an electric power drive mechanism including an electric motor (1) for producing a drive force with electric power output from the battery (3), the electric motor (1) being changeable between a regenerative state and a nonregenerative state for generating electric power with the kinetic energy of the bicycle in the regenerative state to charge the battery (3) and interrupting the generation of power in the nonregenerative state,
-- a speed detecting means (5) for detecting the running speed of the bicycle, and
-- a control unit (13) for setting the motor (1)
the method comprising the step of:
- setting the motor (1) by the control unit (13) in the regenerative state when the running speed detected by the speed detecting means (5) is not lower than a predetermined value, and being **characterized by**
- changing over the regenerative state of the motor (1) to the nonregenerative state by the control unit (13) when the running speed detected by the speed detecting means (5) remains below the predetermined value for a specified period of time.

2. The method according to claim 1, wherein a changeover between an "economical charging" mode wherein the motor (1) is set in the regenerative state when the running speed detected by the speed detecting means (5) is not lower than the predetermined value and a "standard mode" wherein the motor (1) is set in the nonregenerative state irrespective of the running speed detected by the speed detecting means (5) is effected by changeover means.

3. The method according to claim 1, wherein the charging of the battery (3) with the power generated by the motor (1) is interrupted by the control unit (13) when the remaining capacity of the battery (3) is not lower than a specified value.

4. The method according to claim 1, wherein the charging of the battery (3) with the power generated by the motor (1) is interrupted by the control unit (13) when the running speed detected by the speed detecting means (5) is not lower than a given value.

5. The method according to any one of claims 1 to 4 wherein regenerative braking upon detecting braking to charge the battery (3) is effected by the control unit (13).

6. The method according to any one of claims 1 to 4 wherein
- the pedaling force of the bicycle is detected by means of a pedal torque sensor (4), and
- the regenerative state is changed over by the control unit (13) to the nonregenerative state when the running speed detected by the speed detecting means is below the predetermined value and when the pedaling force detected by the pedal torque sensor (4) is not lower than a specified value.

7. The method according to any one of claims 1 to 4 wherein the electric power to be generated by the motor (1) is set at a greater value as the running speed detected by the speed detecting means (5) increases.

8. The method according to claim 2 wherein the auxiliary power of the electric power drive mechanism in the nonregenerative state is set by the control unit (13) at a lower value when selecting the "economical charging" mode than when selecting the "standard" mode.

## Patentansprüche

1. Verfahren zum Steuern eines regenerativen Zustands eines Motors eines elektrisch unterstützten Fahrrads, wobei das Fahrrad umfasst:
- einen Antriebsmechanismus für menschliche Leistung, um mit menschlicher Leistung eine Antriebskraft zu erzeugen,
- eine Batterie (3), die entladen und wieder aufgeladen werden kann,
- einen Antriebsmechanismus für elektrische Leistung, der einen Elektromotor (1) enthält, um eine Antriebskraft mit von der Batterie (3) ausgegebener elektrischer Leistung zu erzeugen, wobei der Elektromotor (1) zwischen einem regenerativen Zustand und einem nicht regenerativen Zustand umschaltbar ist, um im regenerativen Zustand elektrische Leistung anhand der kinetischen Energie des Fahrrads zu erzeugen, um die Batterie (3) aufzuladen, und um im nicht regenerativen Zustand die Erzeugung von Leistung zu unterbrechen,
- ein Geschwindigkeitserfassungsmittel (5), um die Fahrgeschwindigkeit des Fahrrads zu erfassen, und
- eine Steuereinheit (13), um den Motor (1) einzustellen,
wobei das Verfahren den folgenden Schritt umfasst:
- Einstellen des Motors (1) durch die Steuereinheit (13) in den regenerativen Zustand, wenn die von dem Geschwindigkeitserfassungsmittel (5) erfasste Fahrgeschwindigkeit nicht niedriger als ein vorgegebener Wert ist,
**gekennzeichnet durch**
- Umschalten des regenerativen Zustands des Motors (1) in den nicht regenerativen Zustand **durch** die Steuereinheit (13), wenn die **durch** das Geschwindigkeitserfassungsmittel (5) erfasste Fahrgeschwindigkeit für eine bestimmte Zeitdauer unter dem vorgegebenen Wert bleibt.

2. Verfahren nach Anspruch 1, wobei ein Umschalten zwischen einer "wirtschaftlichen Ladebetriebsart", in der der Motor (1) in den regenerativen Zustand versetzt ist, wenn die durch das Geschwindigkeitserfassungsmittel (5) erfasste Fahrgeschwindigkeit nicht niedriger als der vorgegebene Wert ist, und einer "Standardbetriebsart", in der der Motor (1) unabhängig von der durch das Geschwindigkeitserfassungsmittel (5) erfassten Fahrgeschwindigkeit in den nicht regenerativen Zustand versetzt ist, durch das Umschaltmittel ausgeführt wird.

3. Verfahren nach Anspruch 1, wobei das Aufladen der Batterie (3) mit der durch den Motor (1) erzeugten Leistung durch die Steuereinheit (13) unterbrochen wird, wenn die verbleibende Kapazität der Batterie (3) nicht niedriger als ein bestimmter Wert ist.

4. Verfahren nach Anspruch 1, wobei das Aufladen der Batterie (3) mit der durch den Motor (1) erzeugten Leistung durch die Steuereinheit (13) unterbrochen wird, wenn die durch das Geschwindigkeitserfassungsmittel (5) erfasste Fahrgeschwindigkeit nicht niedriger als ein gegebener Wert ist.

5. Verfahren nach einem der Ansprüche 1 bis 4, wobei durch die Steuereinheit (13) ein regeneratives Bremsen ausgeführt wird, wenn ein Bremsvorgang erfasst wird, um die Batterie (3) aufzuladen.

6. Verfahren nach einem der Ansprüche 1 bis 4, wobei
- die Pedalkraft des Fahrrads mittels eines Pedaldrehmomentsensors (4) erfasst wird und
- der regenerative Zustand durch die Steuereinheit (13) in den nicht regenerativen Zustand umgeschaltet wird, wenn die durch das Geschwindigkeitserfassungsmittel erfasste Fahrgeschwindigkeit unter dem vorgegebenen Wert liegt und wenn die durch den Pedaldrehmomentsensor (4) erfasste Pedalkraft nicht niedriger als ein vorgegebener Wert ist.

7. Verfahren nach einem der Ansprüche 1 bis 4, wobei die durch den Motor (1) zu erzeugende elektrische Leistung auf einen größeren Wert gesetzt wird, wenn die durch das Geschwindigkeitserfassungsmittel (5) erfasste Fahrgeschwindigkeit ansteigt.

8. Verfahren nach Anspruch 2, wobei die Steuereinheit (13) die Hilfsleistung des Antriebsmechanismus für elektrische Leistung im nicht regenerativen Zustand dann, wenn die "wirtschaftliche Ladebetriebsart" gewählt ist, auf einen Wert einstellt, der niedriger ist als jener, der eingestellt wird, wenn die "Standardbetriebsart" gewählt ist.

## Revendications

1. Procédé pour commander un état de régénération d'un moteur d'une bicyclette à assistance électrique, la bicyclette comprenant :
-- un mécanisme d'entraînement par puissance humaine pour produire une force d'entraînement avec une puissance humaine,
-- une batterie (3) adaptée à être déchargée et rechargée,
-- un mécanisme d'entraînement par puissance électrique incluant un moteur électrique (1) pour produire une force d'entraînement avec une puissance électrique délivrée par la batterie (3), le moteur électrique (1) pouvant être commuté entre un état de régénération et un état de non régénération pour générer une puissance électrique avec l'énergie cinétique de la bicyclette dans l'état de régénération afin de charger la batterie (3) et pour interrompre la génération de puissance dans l'état de non régénération,
-- un moyen de détection de vitesse (5) pour détecter la vitesse de déplacement de la bicyclette, et
-- une unité de commande (13) pour commander le moteur (1)
le procédé comprenant l'étape consistant à :
- commander le moteur (1) par l'unité de commande (13) dans l'état de régénération quand la vitesse de déplacement détectée par le moyen de détection de vitesse (5) n'est pas inférieure à une valeur prédéterminée,
**caractérisé par**
- une inversion de l'état de régénération du moteur (1) vers l'état de non régénération par l'unité de commande (13) quand la vitesse de déplacement détectée par le moyen de détection de vitesse (5) reste au-dessous de la valeur prédéterminée pendant une période temporelle spécifiée.

2. Procédé selon la revendication 1, dans lequel une inversion entre un mode "chargement économique" dans lequel le moteur (1) est mis dans l'état de régénération quand la vitesse de déplacement détectée par le moyen de détection de vitesse (5) n'est pas inférieure à la valeur prédéterminée, et un mode "standard" dans lequel le moteur (1) est mis dans l'état de non régénération indépendamment de la vitesse de déplacement détecté par le moyen de détection de vitesse (5) est effectuée par des moyens d'inversion.

3. Procédé selon la revendication 1, dans lequel le chargement de la batterie (3) avec la puissance générée par le moteur (1) est interrompu par l'unité de commande (13) quand la capacité restante de la batterie (3) n'est pas inférieure à une valeur spécifiée.

4. Procédé selon la revendication 1, dans lequel le chargement de la batterie (3) avec la puissance générée par le moteur (1) est interrompu par l'unité de commande (13) quand la vitesse de déplacement détectée par le moyen de détection de vitesse (5) n'est pas inférieure à une valeur donnée.

5. Procédé selon l'une quelconque des revendications 1 à 4, dans lequel un freinage régénératif est effectué par l'unité de commande (13) lors d'une détection d'un freinage afin de charger la batterie (3).

6. Procédé selon l'une quelconque des revendications 1 à 4, dans lequel :
- la force de pédalage de la bicyclette est détectée au moyen d'un capteur de couple de pédale (4), et
- l'état de régénération est inversé par l'unité de commande (13) vers l'état de non régénération quand la vitesse de déplacement détectée par le moyen détecteur de vitesse est inférieure à la valeur prédéterminée et quand la force de pédalage détectée par le capteur de couple de pédale (4) n'est pas inférieure à une valeur spécifiée.

7. Procédé selon l'une quelconque des revendications 1 à 4, dans lequel la puissance électrique à générer par le moteur (1) est fixée à une valeur plus élevée lorsque la vitesse de déplacement détectée par le moyen de détection de vitesse (5) augmente.

8. Procédé selon la revendication 2, dans lequel la puissance auxiliaire du mécanisme d'entraînement par puissance électrique dans l'état de non régénération est fixée par l'unité de commande (13) à une valeur plus faible lors de la sélection du mode "chargement économique" que lors de la sélection du mode "standard".
